# EUROPEAN PATENT APPLICATION

(11) **EP 4 621 875 A1**
(43) Date of publication of application: **24.09.2025**
(21) Application number: 23907752.2
(22) Date of filing: 20.12.2023
(51) Int. Cl.: H01M 4/36, H01M 4/525, H01M 4/505, C01G 53/00, H01M 4/131, H01M 10/052, H01M 4/02

(54) **CATHODE ACTIVE MATERIAL, MANUFACTURING METHOD THEREFOR, AND CATHODE AND LITHIUM SECONDARY BATTERY, COMPRISING SAME**

(30) Priority: 22.12.2022 KR 20220182376
(71) Applicant: LG Energy Solution, Ltd., Seoul 07335 (KR)
(72) Inventor: HWANG, Jin Tae, Daejeon 34122 (KR); LHO, Eun Sol, Daejeon 34122 (KR); OH, Su Yeon, Daejeon 34122 (KR); PARK, Byung Chun, Daejeon 34122 (KR); PARK, Sang Min, Daejeon 34122 (KR); LEE, Sang Wook, Daejeon 34122 (KR); KIM, Seul Ki, Daejeon 34122 (KR); KIM, Hyeong Il, Daejeon 34122 (KR)
(74) Representative: Hoffmann Eitle
(86) International application number: PCT/KR2023/021147
(87) International publication number: WO 2024/136469

(57) **Abstract**

A positive electrode active material according to the present invention includes lithium nickel-based transition metal oxide particles in which a mole ratio of nickel in the total transition metals is 80 mol% or greater, and a coating layer formed on a surface of the lithium nickel-based transition metal oxide particles, wherein the lithium nickel-based transition metal oxide particles are in the form of a single particle consisting of one single nodule or a quasi-single particle, a composite of up to 30 nodules, the coating layer includes cobalt and aluminum, and the aluminum is contained in an amount of 0.1 mol% to 0.5 mol% with respect to 100 moles of the lithium nickel-based transition metal oxide.

## Description

### TECHNICAL FIELD

This application claims the benefit of Korean Patent Application No. 10-2022-0182376, filed on 12/22/2022, in the Korean Intellectual Property Office, the disclosure of which is incorporated herein in its entirety by reference.

The present invention relates to a positive electrode active material, a method for preparing the same, and a positive electrode and a lithium secondary battery which include the same, and more particularly, to a positive electrode active material in the form of a single particle, which includes a coating layer containing cobalt and a certain amount of aluminum and thus is provided with low initial resistance and excellent high temperature lifetime, a method for preparing the same, and a positive electrode and a lithium secondary battery which include the same.

### BACKGROUND ART

Lithium secondary batteries are typically provided with a positive electrode, a negative electrode, a separator, and an electrolyte, and the positive electrode and the negative electrode include active materials enabling intercalation/deintercalation of lithium ions.

lithium cobalt oxide (LiCoO₂), lithium nickel oxide (LiNiO₂), lithium manganese oxide (LiMnO₂, LiMnO₄, or the like), lithium iron phosphate compound (LiFePO₄), and the like have been used as a positive electrode active material for lithium secondary batteries. Among those listed above, the lithium cobalt oxide has high operating voltage and excellent capacity characteristics, but it is difficult to commercially apply the lithium cobalt oxide to large-capacity batteries because cobalt, which is a raw material of the lithium cobalt oxide, is expensive and unstably supplied. The lithium nickel oxide has poor structural stability and thus is hardly provided with sufficient lifetime. Meanwhile, the lithium manganese oxide has excellent stability but comes with poor capacity. Accordingly, lithium composite transition metal oxides including at least two types of transition metals have been developed to compensate for the limitations of lithium transition metal oxides including Ni, Co, or Mn alone, and particularly, lithium nickel cobalt manganese oxides including Ni, Co, and Mn have been widely used in the field of batteries for electric vehicles.

Typical lithium nickel cobalt manganese oxides are generally in the form of a spherical secondary particle in which several tens to several hundreds of primary particles are aggregated. However, when the lithium nickel cobalt manganese oxides in the form of a secondary particle in which a number of primary particles are aggregated is applied, the detachment of primary particles, that is, the breakage of particles, easily takes place in a rolling process in the manufacture of a positive electrode, and cracks are generated inside particles in a charging/discharging process. When the breakage or cracking of positive electrode active material particles is caused, a contact area with an electrolyte is increased to increase gas generation and deterioration of the active material, which are caused by a side reaction with an electrolyte, and accordingly, lifetime characteristics are degraded.

In order to address the issues described above, there has been proposed a technique of preparing a positive electrode active material in the form of a single particle-not a secondary particle-by increasing a firing temperature in the preparation of a lithium nickel cobalt manganese oxide. Since the positive electrode active material in the form of a single particle has a smaller contact area with an electrolyte than a typical positive electrode active material in the form of a secondary particle, fewer side reactions with an electrolyte occur, and since the single particle has excellent particle strength, less breakage of particles occurs in the manufacture of an electrode. Therefore, when the positive electrode active material in the form of a single particle is used, there are benefits of reduced gas generation and excellent lifetime characteristics. However, a typical positive electrode active material in the form of a single particle requires a high firing temperature during synthesis, and accordingly, a crystal structure on a particle surface turns into a rock-salt structure from a layered structure. The surface of the rock-salt structure, which is non-conductive, hinders the movement of lithium ions during charging and discharging, thereby reducing the lifetime of batteries.

### DISCLOSURE OF THE INVENTION

### TECHNICAL PROBLEM

In order to address the above-described tasks, an aspect of the present invention provides a positive electrode active material including a coating layer containing cobalt and a specific amount of aluminum, and thus suppressing deterioration thereof in a charging/discharging process.

Another aspect of the present invention provides a positive electrode and a lithium secondary battery, which include the positive electrode active material, and thus have improved initial resistance and high temperature lifetime.

### TECHNICAL SOLUTION

According to an aspect of the present invention, provided is a positive electrode active material including lithium nickel-based transition metal oxide particles in which a mole ratio of nickel in the total transition metals is 80 mol% or greater, and a coating layer formed on a surface of the lithium nickel-based transition metal oxide particles, wherein the lithium nickel-based transition metal oxide particles are in the form of a single particle consisting of one single nodule or a quasi-single particle, a composite of up to 30 nodules, the coating layer includes cobalt and aluminum, and the aluminum is contained in an amount of 0.1 mol% to 0.5 mol% with respect to 100 moles of the lithium nickel-based transition metal oxide.

The cobalt may be contained in an amount of 0.5 mol% to 5.0 mol% with respect to 100 moles of the lithium nickel-based transition metal oxide.

In the lithium nickel-based transition metal oxide particles, a mole ratio of nickel in the total transition metals may be 90 mol% or greater.

The coating layer may be formed to be discontinuously distributed on the surface of the lithium nickel-based transition metal oxide particles.

The positive electrode active material may have a peak in a 2θ range of 37° to 38° on an XRD graph.

The positive electrode active material may have a peak in a 2θ range of 45° to 46° on an XRD graph.

The nodule of the positive electrode active material may have an average particle diameter of 1.0 µm to 9.0 µm.

The positive electrode active material may have a D₅₀ of 4.0 µm to 9.0 µm.

According to another aspect of the present invention, provided is a method for preparing a positive electrode active material, which includes (A) mixing a transition metal precursor containing nickel, cobalt, and manganese with a lithium raw material and subjecting the mixture to primary firing to form a lithium nickel-based transition metal oxide, and (B) mixing the lithium nickel-based transition metal oxide with cobalt and aluminum and subjecting the mixture to secondary firing to form a positive electrode active material including a coating layer, wherein in the lithium nickel-based transition metal oxide, a mole ratio of nickel in the total transition metals is 80 mol% or greater, the lithium nickel-based transition metal oxide is a single particle consisting of one single nodule or a quasi-single particle, a composite of up to 30 nodules, and in the step (B), a mole ratio of aluminum to the lithium nickel-based transition metal oxide (aluminum/lithium nickel-based transition metal oxide) is 0.001 to 0.005.

The step (B) may be performed at 660 °C to 720 °C.

The coating layer may be formed to be discontinuously distributed on a surface of the lithium nickel-based transition metal oxide particles.

The step (A) may be performed at 800 °C to 890 °C.

A separate washing process may not be performed between the step (A) and the step (B)

According to another aspect of the present invention, provided are a positive electrode containing the positive electrode active material described above, and a lithium secondary battery containing the positive electrode.

### ADVANTAGEOUS EFFECTS

A positive electrode active material according to the present invention contains a lithium nickel-based transition metal oxide in the form of a single particle and/or a quasi-single particle with excellent particle strength, and thus is less likely to have particle breakage or cracks caused by rolling in the manufacture of an electrode, and accordingly, has less gas generation and deterioration of an active material, which are caused by a side reaction with an electrolyte, to provide excellent high temperature lifetime.

In addition, the positive electrode active material according to the present invention forms a coating layer having a high cobalt content on a surface of a lithium nickel-based transition metal oxide by mixing lithium nickel-based transition metal oxide, cobalt, and a specific amount of aluminum at once, and this may suppress deterioration of a positive electrode active material in a charging/discharging process of batteries to provide excellent high temperature lifetime.

### BRIEF DESCRIPTION OF THE DRAWINGS

FIG. 1 is a scanning electron microscope (SEM) image of a positive electrode active material powder prepared in Example 1 of the present invention;
FIG. 2 is a scanning electron microscope (SEM) image of a positive electrode active material powder prepared in Example 2 of the present invention;
FIGS. 3 to 6 are SEM images of positive electrode active material powders prepared in Comparative Examples 1 to 4 of the present invention;
FIG. 7 is an electron energy loss spectroscopy (EELS) image of a positive electrode active material prepared in Example 1 of the present invention;
FIGS. 8 to 11 are EELS images of positive electrode active materials prepared in Comparative Examples 1 to 4 of the present invention;
FIG. 12 is a graph showing the results of X-ray diffraction (XRD) analysis of positive electrode active materials prepared in Examples 1 and 2 and Comparative Examples 1 to 4 of the present invention; and
FIG. 13 is a graph showing the capacity retention according to the number of cycles of batteries containing positive electrode active materials prepared in Examples 1 and 2 and Comparative Examples 1 to 5 of the present invention.

### MODE FOR CARRYING OUT THE INVENTION

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

As used herein, "single particle" is a particle consisting of a single nodule. As used herein, "quasi-single particle" refers to a particle which is a composite formed of up to 30 nodules.

As used herein, "nodule" refers to particle unit body constituting a single particle and a quasi-single particle, and the nodule may be a single crystal lacking any crystalline grain boundary, or may be a polycrystal in which grain boundaries are not present when observed in a field of view of 5000× to 20000× using a scanning electron microscope (SEM). As used herein, an average particle diameter of the nodule may be determined as an arithmetic average value of particle diameters of each nodule measured using scanning electron microscope (SEM).

As used herein, "secondary particle" refers to a particle formed by aggregation of a plurality several tens to several hundreds of primary particles. More specifically, the secondary particle is an aggregate of 40 primary particles or more.

As used herein, when "particle" is described, any one or all of a single particle, a quasi-single particle, a primary particle, a nodule, and a secondary particle may be encompassed.

As used herein, "D₅₀" refers to a particle size with respect to 50% in the volume accumulated particle size distribution of a positive electrode active material. The D₅₀ may be measured using a laser diffraction method. For example, the average particle diameter D50 may be measured in a way that the positive electrode active material powder is dispersed in a dispersion medium, the dispersion medium is introduced into a commercial laser diffraction particle size measurement instrument (e.g., Microtrac MT 3000) and irradiated with ultrasonic waves having a frequency of about 28 kHz and an output of 60 W to obtain a volume accumulated particle size distribution graph, and the particle diameter at 50% of the volume accumulation is calculated.

As used herein, a "specific surface area" is measured through a BET method, and specifically may be calculated from an amount of nitrogen gas adsorbed at a liquid nitrogen temperature (77K) using BELSORP-mino II from BEL JAPAN, INC.

Hereinafter, the present invention will be described in more detail.

### Positive electrode active material

A positive electrode active material according to the present invention includes lithium nickel-based transition metal oxide particles in which a mole ratio of Ni in the total transition metals is 80 mol% or greater, preferably 90 mol% or greater. When the mole ratio of Ni satisfies the above range, excellent capacity may be achieved.

The lithium nickel-based transition metal oxide particles are in the form of a single particle consisting of one nodule and/or a quasi-single particle which is a composite of up to 30 nodules, preferably 2 to 20 nodules, more preferably 2 to 10 nodules. Since the lithium nickel-based transition metal oxide in the form of a single particle and/or a quasi-single particle has higher particle strength than a typical lithium nickel-based transition metal oxide in the form of a secondary particle in which several tens to several hundreds of primary particles are aggregated, particles are less broken in rolling.

In addition, since the lithium nickel-based transition metal oxide in the form of a single particle or a quasi-single particle according to the present technology has a small number of sub-parts (i.e. nodules) constituting particles, changes resulting from the volume expansion/contraction of primary particles during charging and discharging are small, and accordingly, the generation of cracks inside the particles is substantially reduced.

The positive electrode active material according to the present invention includes a coating layer formed on a surface of the lithium nickel-based transition metal oxide particles. The coating layer includes cobalt and aluminum.

The coating layer containing cobalt and aluminum suppresses deterioration of the positive electrode active material during the charging and discharging process of batteries to improve high temperature lifetime.

In particular, the inventors of the present invention have found that when a positive electrode active material, in which aluminum contained in the coating layer is in an amount of 0.1 mol% to 0.5 mol% with respect to 100 moles of the lithium nickel-based transition metal oxide, the diffusion of cobalt into particles at high firing temperature is suppressed, and thus a coating layer having a high cobalt content is formed, resulting in further improved high temperature lifetime characteristics. Preferably, aluminum contained in the coating layer may be in an amount of 0.2 mol% to 0.5 mol% with respect to 100 moles of the lithium nickel-based transition metal oxide.

When the aluminum contained in the coating layer is in an amount of less than 0.1 mol% with respect to 100 moles of the lithium nickel-based transition metal oxide, the diffusion of cobalt into particles at high firing temperature may not be suppressed, resulting in an insignificant effect of improving high temperature lifetime characteristics, and when the aluminum is in an amount of greater than 0.5 mol%, rolling density is excessively reduced and initial resistance increases due to the large amount of aluminum in the coating layer.

Cobalt contained in the coating layer may be in an amount of 0.5 mol% to 5.0 mol%, preferably 1.0 mol% to 4.0 mol%, more preferably 1.5 mol% to 2.5 mol%, with respect to 100 moles of the lithium nickel-based transition metal oxide. When the cobalt contained in the coating layer is in an amount of less than 0.5 mol% with respect to 100 moles of the lithium nickel-based transition metal oxide, high temperature lifetime is poor due to the insufficient amount of cobalt coating, and when the cobalt is in an amount of greater than 5.0 mol%, an amount of nickel, which contributes to capacity among all transition metals, may decrease, which may cause a reduction in charging capacity.

When the amount of aluminum and the amount of cobalt, which are contained in the coating layer, both satisfy the above range, the effect of improving high temperature lifetime characteristics while minimizing reduction in charging capacity may be achieved.

Meanwhile, the positive electrode active material according to the present invention may include a coating layer that is formed to be discontinuously distributed on a surface of the lithium nickel-based transition metal oxide particles. The discontinuously distributed coating layer indicates the formation of a thick coating layer in which cobalt doping on a surface of the positive electrode active material is suppressed to the maximum, and the coating layer may maximize an effect of protecting the surface of the positive electrode active material. In contrast, a case in which the coating layer has a layered structure that is present continuously on the surface of particles indicates the formation of a thin coating layer, and cobalt doping on a surface of the positive electrode active material may be formed locally, thereby reducing an effect of protecting the surface of the positive electrode active material.

Meanwhile, the positive electrode active material according to the present invention may have a peak in a 2θ range of 37° to 38° and/or 45° to 46° on an XRD graph. The measurement conditions were based on Cu-Kα radiation, and a 2θ range of 35° to 48° was measured at 40 kV to obtain an X-ray diffraction analysis pattern. On the surface of lithium nickel-based transition metal oxide, cobalt may react with residual Li to form LiCoO₂ phase. Having a peak in the 2θ range provides the coating form of LiCoO₂ phase on the surface of the lithium nickel-based transition metal oxide to suppress deterioration of the positive electrode active material during the charging/discharging process of batteries, and accordingly, excellent high temperature lifetime may be achieved.

Meanwhile, the positive electrode active material according to the present invention may include a lithium nickel-based oxide, and specifically may include a lithium nickel-based oxide having the composition shown in Formula 1 below.

[Formula 1] LiₐNi_{b}Co_{c}M¹_{d}M²ₑO₂

In Formula 1, M¹ is Mn, Al, or a combination thereof, preferably Mn or a combination of Mn and Al, and M² is at least one selected from the group consisting of Ba, Ca, Zr, Ti, Mg, Ta, Nb, and Mo. Although the M² element is not necessarily included, when an appropriate amount of the M² element is included, it may serve to promote grain growth during firing or enhance the stability of a crystal structure.

A represents a mole ratio of lithium in the lithium nickel-based oxide and may satisfy 0.80≤a≤1.20, 0.90≤a≤1.10, or 0.95≤a≤1.15. When the mole ratio of lithium satisfies the above range, a stable layered crystal structure may be formed.

b represents a mole ratio of nickel among all metals excluding lithium in the lithium nickel-based oxide and may satisfy 0.80≤b<1, 0.85≤b<1, or 0.90≤b<1. When the mole ratio of nickel satisfies the above range, excellent capacity may be achieved, and in particular, when the mole ratio of nickel is 0.90 or greater, further improved capacity characteristics may be achieved.

c represents a mole ratio of cobalt among all metals excluding lithium in the lithium nickel-based oxide and may satisfy 0<c<0.45, 0<c<0.40, 0<c<0.20, or 0<c<0.18.

d represents a mole ratio of M¹ among all metals excluding lithium in the lithium nickel-based oxide and may satisfy 0<d<0.45, 0<d<0.40, 0<d<0.20, or 0<d<0.18.

e represents a mole ratio of M² among all metals excluding lithium in the lithium nickel-based oxide and may satisfy 0≤e≤0.20, 0≤e≤0.15, or 0≤e≤0.10.

The positive electrode active material according to the present invention may have an average nodule particle diameter of 1.0 µm to 9.0 µm, 2.0 µm to 6.0 µm, or 3.0 µm to 5.0 µm. When the average particle diameter of the nodule of the positive electrode active material according to the present invention satisfies the above range, high energy density and low initial resistance may be achieved. When the average particle diameter of the nodule of the positive electrode active material according to the present invention is less than 1.0 µm, the specific surface area of the entire positive electrode active material is increased, and thus a side reaction with an electrolyte may be increased, and when the average particle diameter of the nodule is greater than 9.0 µm, lithium mobility in the positive electrode active material is decreased, and thus the output characteristics of a battery may be degraded.

The positive electrode active material according to the present invention may have a D₅₀ of 4.0 µm to 9.0 µm, 5.0 µm to 8.0 µm, or 6.0 µm to 8.0 µm. When the D₅₀ of the positive electrode active material according to the present invention satisfies the above range, high energy density and low initial resistance may be achieved. When the D₅₀ of the positive electrode active material is less than 4.0 µm, a high rolling density is hardly achieved, and thus the energy density may be reduced, and when the D₅₀ is greater than 9.0 µm, lithium mobility in the positive electrode active material is decreases, and thus a lithium secondary battery containing the positive electrode active material may have increased initial resistance.

### Method for preparing positive electrode active material

Next, a method for preparing the positive electrode active material according to the present invention will be described.

When preparing a positive electrode active material in which a mole ratio of Ni in the total transition metals is 80 mol% or greater, the level of completion for a surface structure of the positive active material may be low due to high firing temperature, and the concentration of residual lithium may be high. In addition, when a particle diameter of the positive electrode active material is large, high initial resistance is provided. Accordingly, a technology designed to improve the level of completion for the surface structure through a coating layer formed on the surface of lithium nickel-based transition metal oxide particles, reduce the concentration of residual lithium, and lower initial resistance through optimization of coating conditions is needed.

The method for preparing a positive electrode active material according to the present invention includes (A) mixing a transition metal precursor containing nickel, cobalt, and manganese with a lithium raw material and subjecting the mixture to primary firing to form a lithium nickel-based transition metal oxide, and (B) mixing the lithium nickel-based transition metal oxide with cobalt and aluminum and subjecting the mixture to secondary firing to form a positive electrode active material including a coating layer.

In addition, the lithium nickel-based transition metal oxide is a single particle consisting of one single nodule, or a quasi-single particle that is a composite of up to 30 nodules, in which a mole ratio of Ni in the total transition metals is 80 mol% or greater. Since the above-described description is equally applied, a redundant description will be skipped.

Hereinafter, each step of the method for preparing a positive electrode active material will be described in detail.

First, a transition metal precursor containing nickel, cobalt, and manganese is mixed with a lithium raw material and subjecting the mixture to primary firing to form a lithium nickel-based transition metal oxide (step (A)).

In this case, the positive electrode active material precursor may be purchased and used as a commercially available precursor such as nickel cobalt manganese hydroxide, or may be prepared according to a method for preparing a precursor known in the art, such as a coprecipitation method.

For example, a transition metal-containing solution including nickel (Ni), cobalt (Co), and a M¹ cation is prepared, and then the transition metal-containing solution may be subjected to co-precipitation by adding an ammonium cation-containing complex-forming agent and a basic aqueous solution to prepare a positive electrode active material precursor.

The transition metal-containing solution may include a nickel-containing raw material, a cobalt-containing raw material, and a M¹-containing raw material, and the M¹-containing raw material may be a manganese-containing raw material and/or an aluminum-containing raw material.

The nickel-containing raw material may be, for example, a nickel-containing acetate, nitrate, sulfate, halide, sulfide, hydroxide, oxide, oxyhydroxide, or the like, specifically, Ni(OH)₂, NiO, NiOOH, NiCO₃·2Ni(OH)₂·4H₂O, NiC₂O₂·2H₂O, Ni(NO₃)₂ ·6H₂O, NiSO₄, NiSO₄·6H₂O, a nickel salt of a fatty acid, a nickel halide, or a combination thereof, but is not limited thereto.

The cobalt-containing raw material may be, for example, a cobalt-containing acetate, nitrate, sulfate, halide, sulfide, hydroxide, oxide, oxyhydroxide, or the like, specifically, Co(OH)₂, CoOOH, Co(OCOCH₃)₂·4H₂O, Co(NO₃)₂·6H₂O, CoSO₄, Co(SO₄)₂ ·7H₂O, or a combination thereof, but is not limited thereto.

The manganese-containing raw material may be, for example, a manganese-containing acetate, nitrate, sulfate, halide, sulfide, hydroxide, oxide, oxyhydroxide, or a combination thereof, specifically, a manganese oxide such as Mn₂O₃, MnO₂, and Mn₃O₄; a manganese salt such as MnCO₃, Mn(NO₃)₂, and MnSO₄, manganese acetate, manganese dicarboxylate, manganese citrate, or a manganese salt of a fatty acid; manganese oxyhydroxide, manganese chloride, or a combination thereof, but is not limited thereto.

The aluminum-containing raw material may be, for example, Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, an aluminum halide, or a combination thereof.

The transition metal-containing solution may be prepared by adding a nickel-containing raw material, a cobalt-containing raw material, and a M¹-containing raw material to a solvent, specifically, water or a solvent mixture of water and an organic solvent (e.g., alcohol, and the like) uniformly mixable with water or by mixing an aqueous solution of a nickel-containing raw material, an aqueous solution of a cobalt-containing raw material, and an aqueous solution of a M¹-containing raw material.

The ammonium cation-containing complex-forming agent may be, for example, NH₄OH, (NH₄)₂SO₄, NH₄NO₃, NH₄Cl, CH₃COONH₄, NH₄CO₃, or a combination thereof, but is not limited thereto. Meanwhile, the ammonium cation-containing complex-forming agent may be used in the form of an aqueous solution, and in this case, water or a mixture of water and an organic solvent (specifically, alcohol, and the like) uniformly mixable with water may be used as a solvent.

The basic compound may be a hydroxide of an alkali metal or alkaline earth metal such as NaOH, KOH, or Ca(OH)₂, a hydrate thereof, or a combination thereof. The basic compound may also be used in the form of an aqueous solution, and in this case, water or a mixture of water and an organic solvent (specifically, alcohol, and the like) uniformly mixable with water may be used as a solvent.

The basic compound is added to adjust the pH of a reaction solution and may be added in an amount such that the pH of a metal solution becomes 8 to 12.

The co-precipitation may be performed under an inert atmosphere such as a nitrogen or argon atmosphere at a temperature ranging from 35 °C to 80 °C.

Positive electrode active material precursor particles formed of a nickel-cobalt-M¹ hydroxide are produced through the above-described process and precipitated in a reaction solution. By adjusting the concentration of the nickel-containing raw material, cobalt-containing raw material, and M¹-containing raw material, a positive electrode active material precursor having a nickel (Ni) content accounting for 80 mol % or greater of the total metal content may be prepared. The precipitated positive electrode active material precursor particles may be separated through a typical method and dried to prepare a positive electrode active material precursor.

Thereafter, the positive electrode active material precursor and a lithium raw material may be mixed.

As the lithium raw material, lithium-containing sulfate, nitrate, acetate, carbonate, oxalate, citrate, halide, hydroxide, or oxyhydroxide may be used, and the lithium raw material is not particularly limited as long as it is able to be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO4, CH₃COOLi, Li₃C₆H₅O₇, or the like, which may be used alone or in combination of two or more thereof.

The positive electrode active material precursor and the lithium raw material may be mixed, for example, in a mole ratio of about 1:1, about 1:1.05, about 1:1.10, about 1:1.15, or about 1:1.20.

Thereafter, the mixture may be subjected to primary firing. The primary firing may be performed in an air or oxygen atmosphere. The primary firing may be performed at a temperature of 800 °C to 890 °C, 800 °C to 870 °C, or 800 °C to 860 °C. The primary firing may be performed for 4 to 12 hours, 6 to 12 hours, or 8 to 12 hours.

Next, the lithium nickel-based transition metal oxide is mixed with cobalt and aluminum and the mixture is subjected to secondary firing to form a positive electrode active material including a coating layer(step (B)).

For example, a surface of the lithium nickel-based transition metal oxide particles is coated with a cobalt compound and an aluminum compound.

For example, the cobalt compound may be one or more of Co(OH)₂, CoOOH, Co(OCOCH₃)₂4H₂O, Co(NO₃)₂6H₂O, CoSO₄, or Co(SO₄)₂7H₂O.

For example, the aluminum compound may be one or more of Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, or aluminum halide.

As such, the coating layer contains both cobalt and aluminum, and accordingly, high temperature lifetime may be improved. When coating is done only with cobalt, lifetime characteristics may be decreased due to deterioration of the positive electrode active material during the charging/discharging process of batteries, which is caused by the diffusion of cobalt into the positive electrode active material at high temperature.

A mole ratio of cobalt to the lithium nickel-based transition metal oxide (cobalt/lithium nickel-based transition metal oxide) is 0.01 or greater, preferably 0.01 to 0.04, more preferably 0.02 to 0.03.

A mole ratio of aluminum to the lithium nickel-based transition metal oxide (aluminum/lithium nickel-based transition metal oxide) is 0.001 to 0.005, preferably 0.0015 to 0.005, more preferably 0.002 to 0.004. When the above range is satisfied, diffusion of cobalt into particles at high firing temperature is suppressed, and accordingly, a coating layer having a high cobalt content is formed, resulting in further improved high temperature lifetime characteristics.

When the aluminum contained in the coating layer is in an amount of less than 0.1 mol% with respect to 100 moles of the lithium nickel-based transition metal oxide, the diffusion of cobalt into particles at high firing temperature may not be suppressed, resulting in an insignificant effect of improving high temperature lifetime characteristics, and when the aluminum is in an amount of greater than 0.5 mol%, rolling density is excessively reduced and initial resistance increases due to the large amount of aluminum in the coating layer.

The secondary firing may be performed at a temperature of 660 °C to 720 °C, preferably 670 °C to 710 °C, more preferably 690 °C to 710 °C.

When the secondary firing temperature is below the above range, the diffusion of cobalt into the positive electrode active material is suppressed and thus the cobalt may react with residual Li on the surface to form LiCoO₂, but compared when the secondary firing is performed within the above range, a coating layer having a low cobalt content is formed, and thus the effect of improving high temperature lifetime characteristics may be insignificant.

The secondary firing may be performed for 3 to 12 hours, preferably 4 to 8 hours, more preferably 5 to 7 hours.

When the lithium nickel-based transition metal oxide is mixed with cobalt and aluminum in the above firing temperature and the mixture is subjected to secondary firing in the above firing time range, a discontinuously distributed cobalt and aluminum coating layer may be formed on the surface of the lithium nickel-based transition metal oxide particles.

A separate washing process may not be performed between the step (A) and the step (B). Typically, lithium by-products present on the surface of the positive electrode active material were washed with water. This is because when lithium by-products are present, side reactions with an electrolyte are caused when the positive electrode active material is applied to batteries, and gas generation increases at high temperature storage. In contrast, in the preparation method according to one aspect of the present invention, without a separate water washing process, lithium by-products are present on the surface of particles, and these lithium by-products react with cobalt to form coating of LiCoO₂ phase on the surface of particles, thereby achieving excellent high temperature lifetime characteristics.

### Positive electrode

A positive electrode according to the present invention includes the positive electrode active material according to the present invention described above. Specifically, the positive electrode includes a positive electrode current collector and a positive electrode active material layer formed on the positive electrode current collector, and the positive electrode active material layer includes the positive electrode active material according to the present invention. Since the positive electrode active material has been described above, the detailed description thereof will be skipped, and hereinafter, the other components will only be described.

The positive electrode current collector may include a highly conductive metal and is not particularly limited as long as the positive electrode active material layer easily adheres thereto and the positive electrode current collector has no reactivity in the voltage range of a battery. As the positive electrode current collector, for example, stainless steel, aluminum, nickel, titanium, thermally treated carbon, aluminum or stainless steel whose surface has been treated with carbon, nickel, titanium, silver, or the like may be used. In addition, the positive electrode current collector may typically have a thickness of 3 µm to 500 µm, and fine irregularities may be formed on a surface of the current collector to improve the adhesion of a positive electrode active material. For example, the positive electrode current collector may be used in various forms such as a film, a sheet, a foil, a net, a porous body, a foam body, and a non-woven fabric body.

The positive electrode active material layer may optionally include a conductive material and a binder in addition to the positive electrode active material, as necessary.

In this case, the positive electrode active material may be included in an amount of 80 wt% to 99 wt%, more specifically 90 wt% to 98 wt%, with respect to the total weight of the positive electrode active material layer.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fibers; metal powder or metal fiber such as copper, nickel, aluminum, and silver; conductive tubes such as carbon nanotubes; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.01 wt% to 10 wt%, preferably 0.1 wt% to 9 wt%, more preferably 0.1 wt% to 5 wt%, with respect to the total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber (SBR), fluorine rubber, polyacrylic acid, and a polymer obtained by substituting hydrogen of the above materials with Li, Na, or Ca, or various copolymers, and any one thereof or a mixture of two or more thereof may be used. The binder may be included in an amount of 1 wt% to 30 wt%, preferably 1 wt% to 20 wt%, more preferably 1 wt% to 10 wt%, with respect to the total weight of the positive electrode active material layer.

The positive electrode may be prepared according to a typical method of preparing a positive electrode, except that the positive electrode active material described above is used. Specifically, a positive electrode slurry composition prepared by dissolving or dispersing the positive electrode active material and, if necessary, optionally dissolving or dispersing a binder, a conductive material, and a dispersant in a solvent, is applied onto the positive electrode current collector, and then dried and rolled to prepare the positive electrode.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent may dissolve or disperse the positive electrode active material, the conductive material, the binder, and the dispersant in consideration of the applying thickness of the slurry and preparation yield, and thereafter, have a viscosity which may exhibit excellent thickness uniformity upon application for the preparation of the positive electrode.

In addition, in another method, the positive electrode may be prepared by casting the positive electrode slurry composition on a separate support and then laminating a film separated from the support on the positive electrode current collector.

### Lithium secondary battery

Next, a lithium secondary battery according to the present invention will be described.

Specifically, the lithium secondary battery includes a positive electrode, a negative electrode positioned to face the positive electrode, a separator interposed between the positive electrode and the negative electrode, and an electrolyte. The positive electrode is the same as that described above, and thus, a detailed description thereof will be omitted. Hereinafter, only the rest of the components will be described in detail.

In addition, the lithium secondary battery may optionally further include a battery case for accommodating an electrode assembly composed of the positive electrode, the negative electrode, and the separator, and a sealing member for sealing the battery case.

In the lithium secondary battery, the negative electrode includes a negative electrode current collector and a negative electrode active material layer positioned on the negative electrode current collector.

The negative electrode current collector is not particularly limited as long as it has a high conductivity without causing chemical changes in batteries. For example, copper, stainless steel, aluminum, nickel, titanium, heat treated carbon, copper or stainless steel that is surface-treated with one of carbon, nickel, titanium, silver, and the like, an aluminum-cadmium alloy, and the like may be used. In addition, the negative electrode current collector may typically have a thickness of 3 µm to 500 µm, and as in the case of the positive electrode current collector, fine irregularities may be formed on the surface of the negative electrode current collector to improve the adhesion of a negative electrode active material. For example, the negative electrode current collector may be used in various forms such as a film, a sheet, a foil, a net, a porous body, a foam body, and a non-woven fabric body.

The negative electrode active material layer optionally includes a binder and a conductive material in addition to the negative electrode active material.

A compound capable of reversibly intercalating and deintercalating lithium may be used as the negative electrode active material. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiO_{β} (0<β<2), SnO₂, a vanadium oxide, and a lithium vanadium oxide; or a composite including the metallic compound and the carbonaceous material such as an Si-C composite or an Sn-C composite, and any one thereof or a mixture of two or more thereof may be used. In addition, as the negative electrode active material, a lithium metal thin film may be used. In addition, as a carbon material, low-crystalline carbon, high-crystalline carbon, and the like may all be used. Typical examples of the low-crystalline carbon may be soft carbon and hard carbon, and typical examples of the high-crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature heat treated carbon such as petroleum or coal tar pitch derived cokes.

The negative electrode active material may be included in an amount of 80 wt% to 99 wt%, 82 wt% to 99 wt%, or 84 wt% to 99 wt%, with respect to the total weight of the negative electrode active material layer.

The binder is a component that assists in the binding between the conductive agent, the active material, and the current collector, and is commonly added in an amount of 0.1 wt% to 10 wt% with respect to the total weight of the negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

The conductive agent is a component for further improving conductivity of the negative electrode active material, and may be included in an amount of 1 wt% to 30 wt%, 1 wt% to 20 wt%, or 1 wt% to 10 wt%, with respect to the total weight of the negative electrode active material layer. Such conductive agent is not particularly limited as long as it has conductivity without causing chemical changes in the battery, and for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; carbon fluoride; metal powder such as aluminum powder, and nickel powder; conductive whiskers such as zinc oxide whiskers and potassium titanate whiskers; conductive metal oxide such as titanium oxide; or polyphenylene derivatives, or the like may be used.

The negative electrode active material layer may be prepared by applying a negative electrode slurry composition, which is prepared by dissolving or dispersing a negative electrode active material and optionally a binder and a conductive agent in a solvent, on a negative electrode current collector and drying the resulting product, or may be prepared by casting the negative electrode slurry composition on a separate support and then laminating a film separated from the support on the negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and a separator having a single-layer structure or a multi-layer structure may be selectively used.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

Any compound may be used as the lithium salt without particular limitation as long as it may provide lithium ions used in a lithium secondary battery. To be specific, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN (CF₃SO₂)₂. LiCl, LiI, or LiB(C₂O₄)₂ may be used. The lithium salt may be used in a concentration range of 0.1 M to 4.0 M, preferably 0.5 M to 3.0 M, more preferably 1.0 M to 2.0 M. When the concentration of the lithium salt is in the above range, the electrolyte has suitable conductivity and viscosity, thereby exhibiting excellent performance, and lithium ions may effectively move.

In addition to the above-described electrolyte components, one or more types of additives such as a haloalkylene carbonate-based compound such as difluoroethylene carbonate, pyridine, triethylphosphite, triethanolamine, a cyclic ether, ethylenediamine, n-glyme, hexaphosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, and aluminum trichloride may be further included in the electrolyte for the purpose of enhancing the lifetime characteristics of batteries, suppressing a reduction in battery capacity, enhancing the discharge capacity of batteries, and the like. In this case, the additive may be included in an amount of 0.1 wt% to 10.0 wt% with respect to a total weight of the electrolyte.

The lithium secondary battery including the positive electrode active material according to the present invention as describe above stably exhibits excellent discharging capacity, output properties, and capacity retention, and thus, are useful for portable devices such as a mobile phone, a notebook computer, and a digital camera, and in the field of electric cars such as a hybrid electric vehicle (HEV).

Accordingly, according to another embodiment of the present invention, a battery module including the lithium secondary battery as a unit cell, and a battery pack including the same are provided.

The battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

Hereinafter, examples of the present invention will be described in detail in such a manner that it may easily be performed by a person skilled in the art to which the present invention pertains. The present invention may, however, be embodied in many different forms, and is not limited to Examples set forth herein.

### Examples and Comparative Examples

### Example 1

A transition metal precursor having a mole ratio of Ni:Co:Mn of 95:3:2 and a lithium raw material (LiOH) were mixed to provide the mole ratio of transition metal (Ni+Co+Mn):Li as 1:1.05, and then the mixture was subjected to primary firing at 800 °C for 15 hours to prepare LiNi_{0.95}CO_{0.03}Mn_{0.02}O₂.

Thereafter, the primary fired product was mixed with Al₂O₃ and Co₃O₄ to provide the mole ratio of the primary fired product:Al:Co as 100:0.2:2, and then the mixture was subjected to secondary firing at 700 °C for 6 hours to prepare a positive electrode active material LiNi_{0.928}Co_{0.05}Mn_{0.02}Al_{0.002}O₂ in which cobalt and aluminum coating layers were formed.

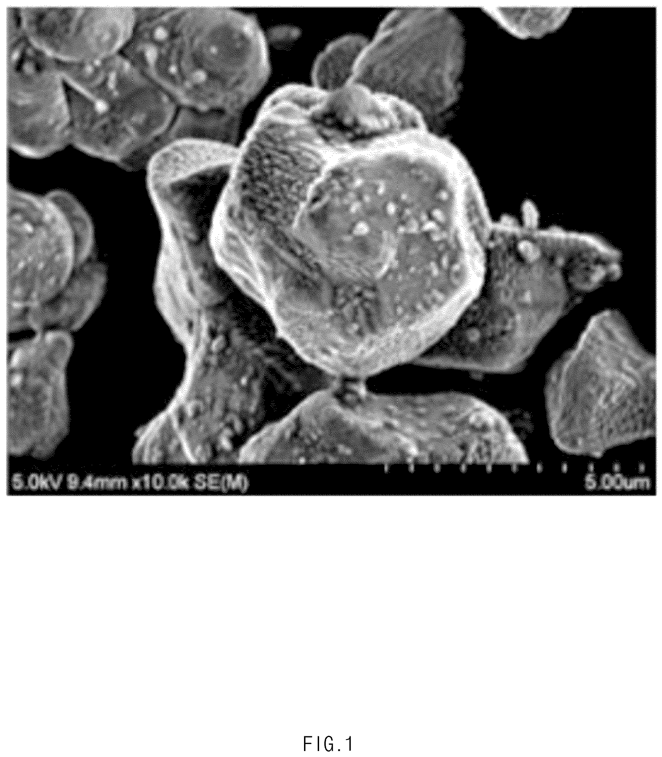

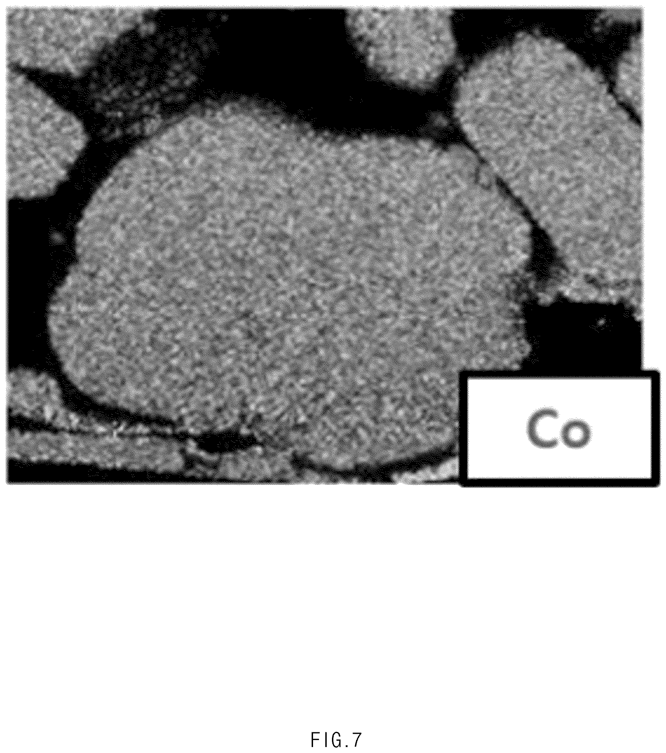

An SEM image of the prepared positive electrode active material powder is shown in FIG. 1. An EELS image of the prepared positive electrode active material powder is shown in FIG. 7.

### Example 2

A positive electrode active material powder LiNi_{0.926}Co_{0.05}Mn_{0.02}Al_{0.004}O₂ in which cobalt and aluminum coating layers were formed was prepared in the same manner as in Example 1, except that secondary firing was performed to provide a mole ratio of the primary fired product:Al:Co as 100:0.4:2.

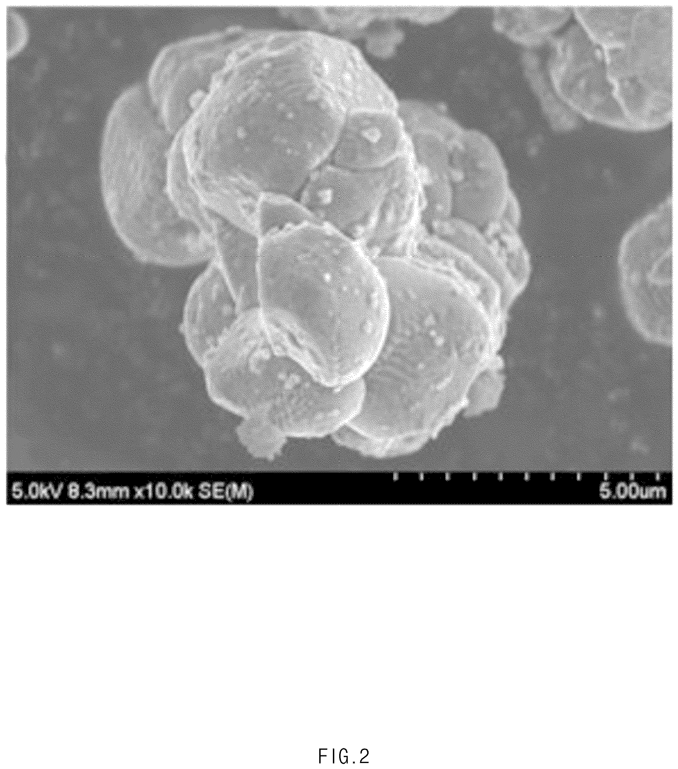

An SEM image of the prepared positive electrode active material powder is shown in FIG. 2.

### Comparative Example 1

A transition metal precursor having a mole ratio of Ni:Co:Mn of 93:5:2 and a lithium raw material (LiOH) were mixed to provide the mole ratio of transition metal (Ni+Co+Mn):Li as 1:1.05, and then the mixture was subjected to primary firing at 800 °C for 15 hours to prepare LiNi_{0.93}Co_{0.05}Mn_{0.02}O₂, and a positive electrode active material powder was prepared in the same manner as in Example 1, except that a coating layer was not formed due to no secondary firing.

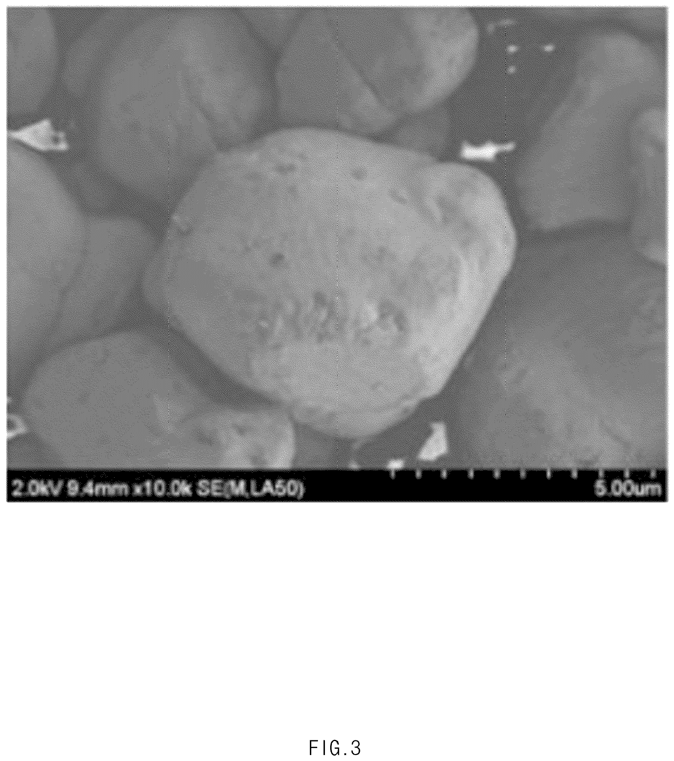

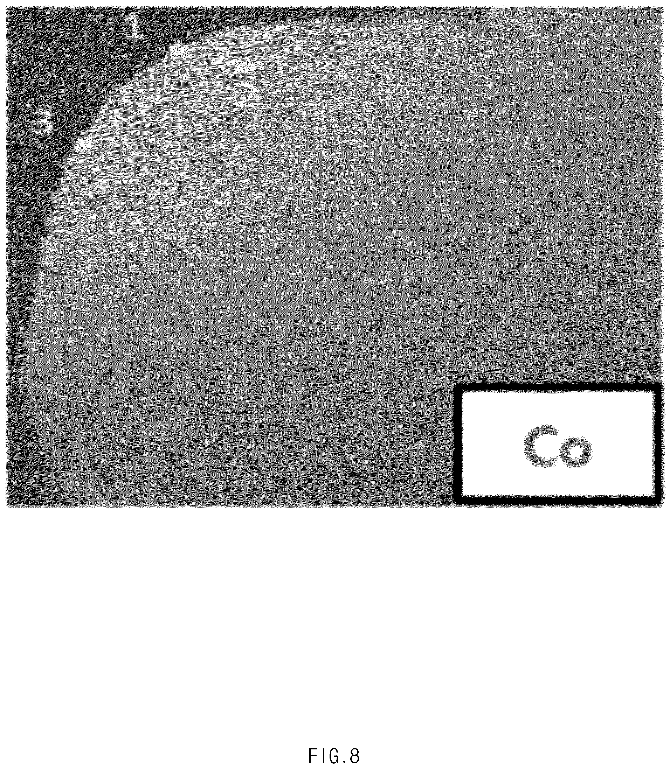

An SEM image of the prepared positive electrode active material powder is shown in FIG. 3. An EELS image of the prepared positive electrode active material powder is shown in FIG. 8.

### Comparative Example 2

A positive electrode active material powder LiNi_{0.93}Co_{0.05}Mn_{0.02}O₂ was prepared in the same manner as in Example 1, except that the primary fired product was mixed alone with Co₃O₄ to provide a mole ratio of the primary fired product: Co as 100:2, and then secondary firing was performed at 700 °C for 6 hours to form a cobalt-only coating layer.

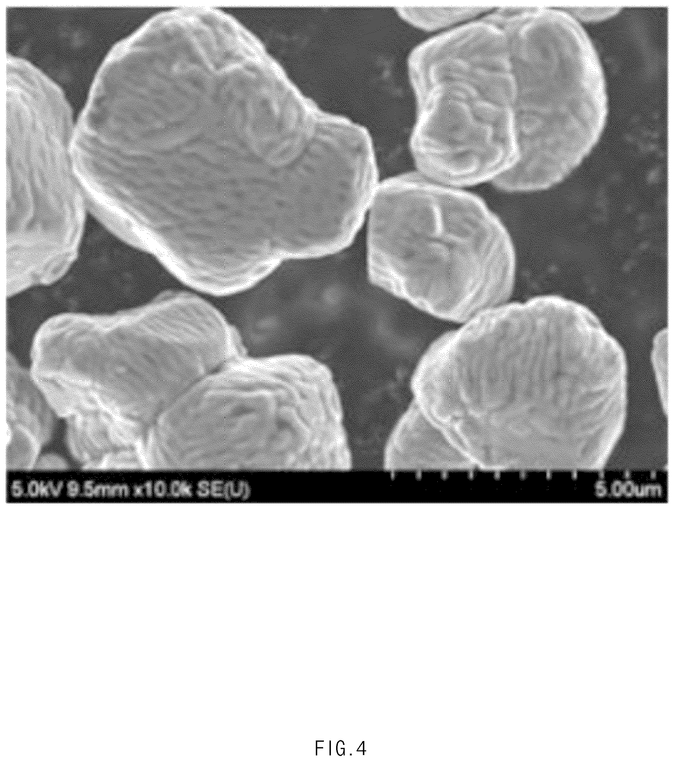

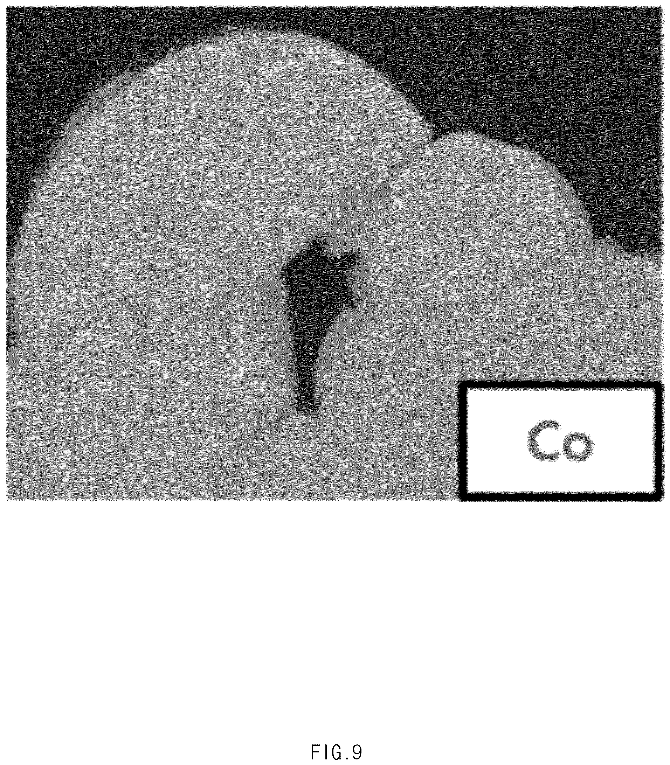

An SEM image of the prepared positive electrode active material powder is shown in FIG. 4. An EELS image of the prepared positive electrode active material powder is shown in FIG. 9.

### Comparative Example 3

A positive electrode active material powder LiNi_{0.93}Co_{0.05}Mn_{0.02}O₂ was prepared in the same manner as in Example 1, except that the primary fired product was mixed alone with Co₃O₄ to provide a mole ratio of the primary fired product: Co as 100:2, and then secondary firing was performed at 650 °C for 6 hours to form a cobalt-only coating layer.

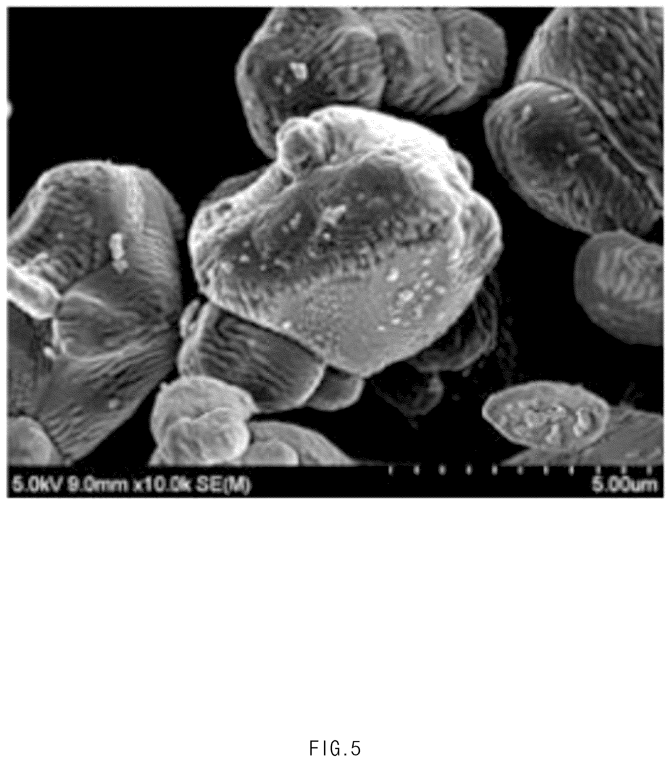

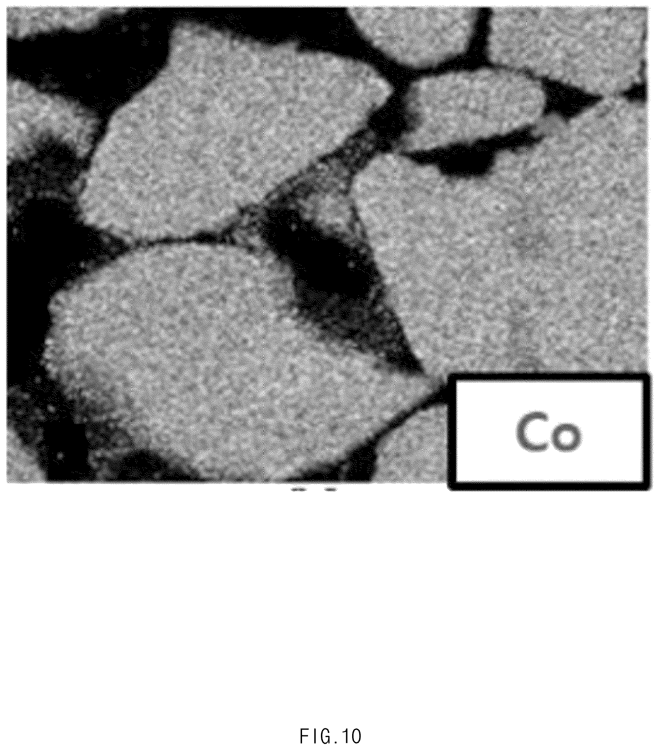

An SEM image of the prepared positive electrode active material powder is shown in FIG. 5. An EELS image of the prepared positive electrode active material powder is shown in FIG. 10.

### Comparative Example 4

A positive electrode active material powder LiNi_{0.925}Co_{0.05}Mn_{0.02}Al_{0.005}O₂ in which cobalt and aluminum coating layers were formed was prepared in the same manner as in Example 1, except that secondary firing was performed to provide a mole ratio of the primary fired product:Al:Co as 100:0.05:2.

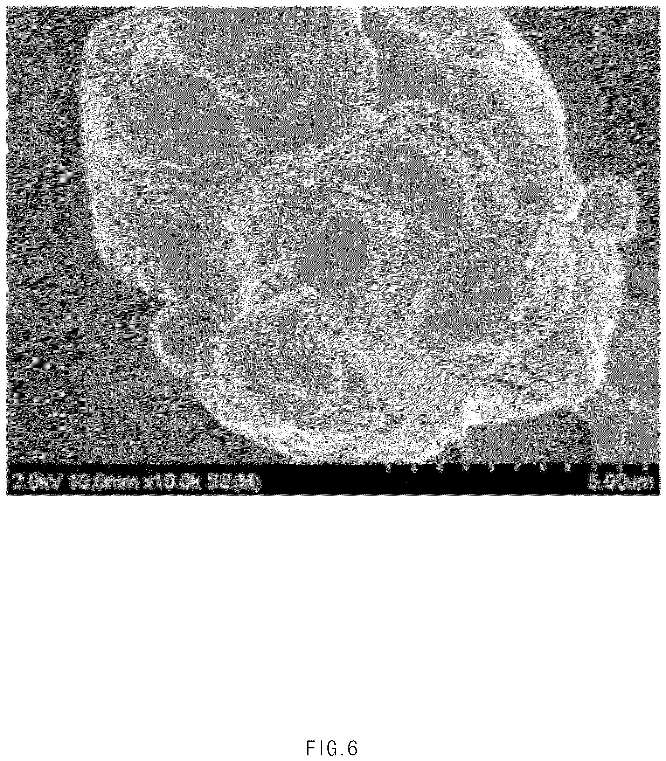

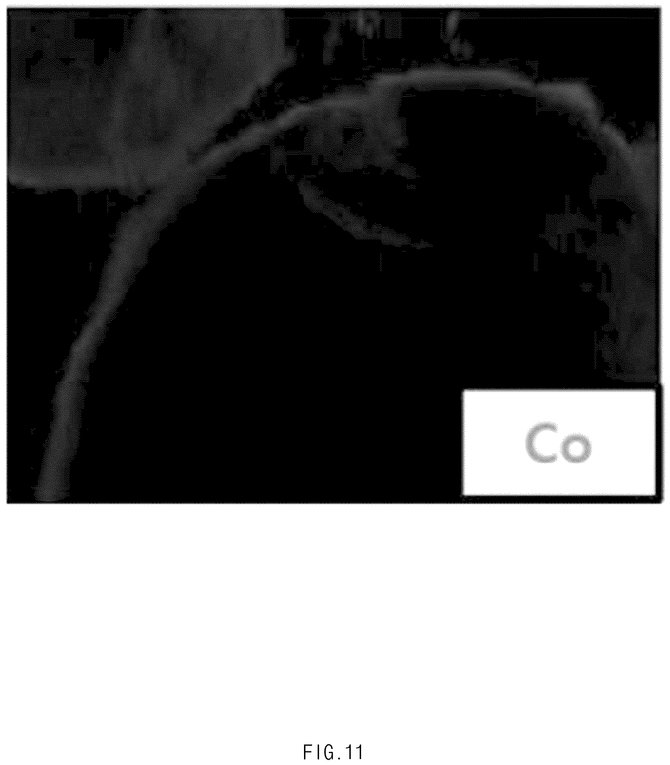

An SEM image of the prepared positive electrode active material powder is shown in FIG. 6. An EELS image of the prepared positive electrode active material powder is shown in FIG. 11.

### Comparative Example 5

A positive electrode active material powder LiNi_{0.924}Co_{0.05}Mn_{0.02}Al_{0.006}O₂ in which cobalt and aluminum coating layers were formed was prepared in the same manner as in Example 1, except that secondary firing was performed to provide a mole ratio of the primary fired product:Al:Co as 100:0.6:2.

### Experimental Example 1: Observation of positive electrode active material surface

Using a scanning electron microscope device, SEM images of the positive electrode active material powders each prepared in Examples 1 and 2 and Comparative Examples 1 to 4 were obtained. These SEM images are shown in FIGS. 1 to 6.

The surfaces of the positive electrode active material powders each prepared in Example 1 and Comparative Examples 1 to 4 were analyzed through transmission electron microscopy (TEM) and electron energy loss spectroscopy (EELS). The resulting images of the surface analysis are each shown in FIGS. 7 to 11.

FIGS. 1, 2, and 7 show that in the positive electrode active materials prepared in Examples 1 and 2, cobalt and aluminum coating layers are formed to be discontinuously distributed on the surface of the lithium nickel-based transition metal oxide particles.

FIGS. 3 to 6 and FIGS. 8 to 11 show that the positive electrode active material prepared in Comparative Example 1 has a clean surface without a coating layer, the positive electrode active material prepared in Comparative Example 2 includes a uniformly layered cobalt coating layer on the surface, the positive electrode active material prepared in Comparative Example 3 has a discontinuously distributed cobalt coating layer on the surface due to the lower coating temperature than that of Comparative Example 2, and the positive electrode active material prepared in Comparative Example 4 has a uniformly layered cobalt coating layer on the surface as almost no aluminum coating layer is formed.

### Experimental Example 2: XRD analysis

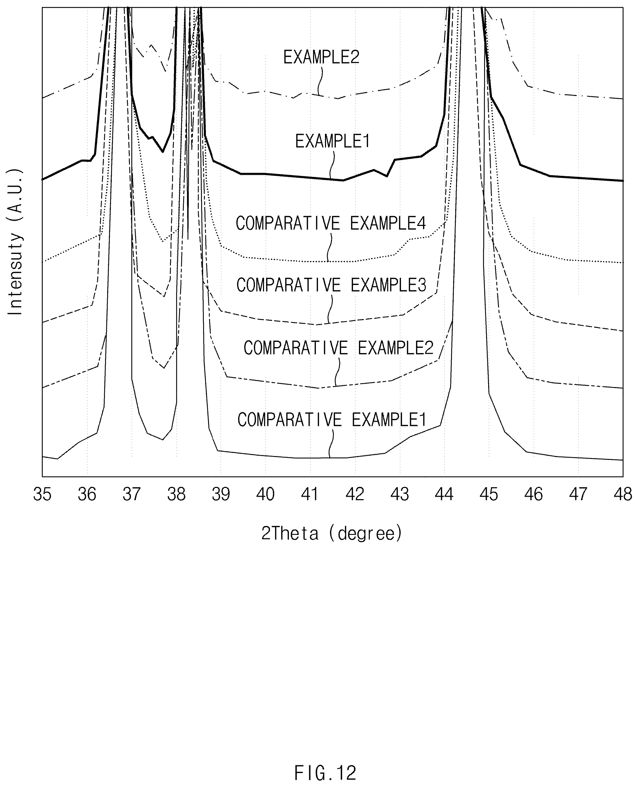

In order to comparatively analyze the coating layers included in the positive electrode active materials each prepared in Examples 1 and 2 and Comparative Examples 1 to 5, XRD analysis was performed on each positive active material using a diffractometer from Rigaku, and the results are shown in FIG. 12. The measurement conditions were based on Cu-Kα radiation, and a 2θ range of 35° to 48° was measured at 40 kV to obtain an X-ray diffraction analysis pattern. In the final analysis data, the presence or absence of peaks in a 2θ range of 37° to 38° and 45° to 46° indicates a coating form having LiCoO₂ (hereinafter referred to as LCO) phase on the surface of the lithium nickel-based transition metal oxide particles in each positive electrode active material.

FIG. 12 shows that as a result of XRD analysis of the positive electrode active material prepared in Example 1, the coating layer was found to be present in the LCO phase through the presence of peaks in the 2θ range of 37° to 38° and 45° to 46°.

In the positive electrode active materials prepared in Comparative Examples 1, 2, and 4, it was found that there were no peaks in the 2θ range of 37° to 38° and 45° to 46°. In contrast, in the positive electrode active material prepared in Comparative Example 3, peaks were found to be present in the 2θ range of 37° to 38° and 45° to 46°, but had lower intensity than the peaks in Examples 1 and 2.

### Experimental Example 3: Measurement of rolling density

The positive electrode active materials each prepared in Examples 1 and 2 and Comparative Examples 1 to 5 were rolled under 9 ton conditions and then the rolling density was measured, and the measurement results are shown in Table 1 below. Specifically, 3 g of the positive electrode active materials of Examples 1 and 2 and Comparative Examples 1 to 5 were divided into small portions using a density meter (Carve Pellet Press) and each was placed into a cylindrical mold, and then the mold containing the positive electrode active material was pressurized with a pressure of 9 tons. Thereafter, the height of the pressurized mold was measured using a vernier caliper to obtain the rolling density.

**[Table 1]**

| | Rolling density (g/cc) |
|---|---|
| Example 1 | 3.54 |
| Example 2 | 3.53 |
| Comparative Example 1 | 3.56 |
| Comparative Example 2 | 3.58 |
| Comparative Example 3 | 3.56 |
| Comparative Example 4 | 3.57 |
| Comparative Example 5 | 3.48 |

Table 1 above shows that the positive electrode active materials prepared in Examples 1 and 2 and Comparative Example 5 have a lower rolling density than the positive electrode active materials prepared in Comparative Examples 1 to 4, and the positive electrode active material of Comparative Example 5 has a lower rolling density than the positive electrode active material of Examples 1 and 2. This indicates that both a cobalt coating layer and an aluminum coating layer are formed on the surface of the positive electrode active material of Examples 1 and 2 and Comparative Example 5, where a mole ratio of aluminum to the primary fired product (aluminum/primary fired product) is 0.2, 0.4, and 0.6, respectively, and accordingly, the rolling density decreases as the surface properties of the positive electrode active materials change.

### Experimental Example 4: Measurement of initial resistance value

Initial resistance values were measured for lithium secondary battery coin half cells manufactured as follows using the positive electrode active materials each prepared in Examples 1 and 2 and Comparative Examples 1 to 5. The measurement results are shown in table 2 below. The initial resistance values were calculated as the voltage change rate when a current of 2.5 C was applied for 10 seconds after setting to 50% of SOC at 0.3 C in the 2nd cycle, with respect to the 1st cycle discharge capacity measured at 0.3 C.

Specifically, the lithium secondary battery coin half cells were manufactured as follows.

The positive electrode active materials each prepared in Examples 1 and 2 and Comparative Examples 1 to 5, a conductive material (Carbon Black, Denka), and a PVDF binder were mixed at a weight ratio of 96:1:3 in N-methylpyrrolidone to prepare a positive electrode slurry. The positive electrode slurry was applied onto one surface of an aluminum collector, dried at 130 °C, and then roll-pressed to prepare a positive electrode.

A negative electrode active material, a binder, and a conductive material were mixed at a wt% of 97.0:1.5:1.5 in an N-methylpyrrolidone solvent to prepare a negative electrode mixture material. In this case, artificial graphite was used as the negative electrode active material, carboxymethyl cellulose (CMC) was used as the binder, and carbon black was used as the conductive material. The prepared negative electrode mixture material was applied to a copper current collector, dried at 110 °C, and rolled to prepare a negative electrode.

A separator was interposed between the positive electrode and the negative electrode prepared through the method described above to manufacture an electrode assembly, and the electrode assembly was placed inside a battery case, and then an electrolyte was injected into the case to manufacture a coin half cell. The electrolyte was prepared by dissolving 1 M concentration of LiPF₆ in a mixed organic solvent in which ethylene carbonate (EC), dimethyl carbonate (DMC), and ethyl methyl carbonate (EMC) were mixed in a volume of 1:1:1, and adding vinylene carbonate (VC) in an amount of 5 wt%.

**[Table 2]**

| | Initial resistance (Ω) |
|---|---|
| Example 1 | 1.50 |
| Example 2 | 1.50 |
| Comparative Example 1 | 1.54 |
| Comparative Example 2 | 1.43 |
| Comparative Example 3 | 1.48 |
| Comparative Example 4 | 1.48 |
| Comparative Example 5 | 1.55 |

Table 2 above shows that the positive electrode active materials prepared in Examples 1 and 2 had a lower initial resistance value than Comparative Example 1 in which no coating layer was formed on the surface, but had a higher initial resistance value than Comparative Examples 2 to 4. It was found that the positive electrode active material prepared in Comparative Example 5 had a significantly higher initial resistance value than the positive active materials prepared in Examples 1 and 2 and Comparative Examples 1 to 4. This is believed to be due to reduced lithium mobility in the positive electrode active material when aluminum increases on the surface of the positive electrode active material, resulting in the initial resistance value.

### Experimental Example 5: Evaluation of lifetime at high temperature

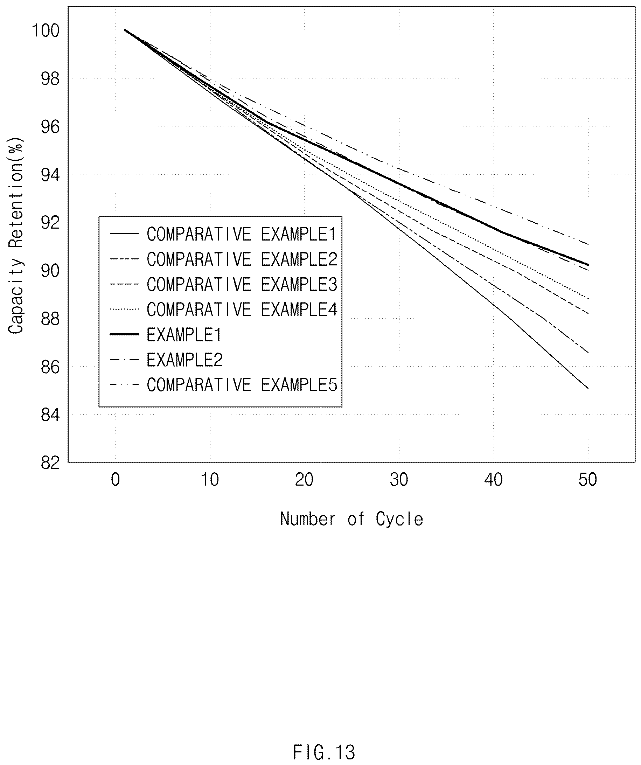

Lithium secondary battery coin half cells including the positive electrode active materials of Examples 1 and 2 and Comparative Examples 1 to 5, manufactured through the method described above, were subjected to 50 cycles of charging and discharging in which charging up to 4.25 V at 0.5 C in CC-CV mode at 45 °C and discharging up to 2.5 V at 1.0 C was set as one cycle, and then capacity retention (%) was measured to evaluate high temperature lifetime characteristics. The measurement results are shown in FIG. 13.

Referring to FIG. 13, it was found that, under the 50 cycle conditions, the capacity retention of each of the lithium secondary batteries of Examples 1 and 2 and Comparative Example 5 was 90.0% or greater, while the capacity retention of each of the lithium secondary batteries of Comparative Examples 1 to 4 were 85.0%, 86.6%, 88.3%, and 88.8%.

In the positive electrode active materials of Examples 1 and 2, both a cobalt coating layer and an aluminum coating layer are formed on the surface, and the diffusion of cobalt into the positive electrode active material particles is suppressed by aluminum, and accordingly, a coating layer having a high cobalt content may be formed. That is, it was found that the lithium secondary batteries containing the positive electrode active materials of Examples 1 and 2 had a higher capacity retention and greater high temperature lifetime than Comparative Examples 1 to 4.

It was found that in the positive electrode active material of Comparative Example 1, a coating layer was not formed on the surface, and thus the capacity retention of the lithium secondary battery was significantly low, indicating poorest high-temperature lifetime characteristics. It was found that the positive electrode active material of Comparative Example 2 had a cobalt-only coating layer formed on the surface, and thus, due to the high coating temperature, cobalt was absorbed from the surface of the positive active material and diffused into the positive active material, indicating an insignificant improvement in high temperature lifetime characteristics. It was found that the positive electrode active material of Comparative Example 3 had a cobalt-only coating layer formed on the surface, but the lower coating temperature than that of Comparative Example 2 eased the phenomenon of cobalt being absorbed from the surface of the positive electrode active material and diffusing into the positive electrode active material, and accordingly, the capacity retention was higher and the improvement in high temperature lifetime characteristics was greater than that of Comparative Example 2. It is seen that in the positive electrode active material of Comparative Example 4, almost no aluminum coating layer is formed on the surface, and accordingly, the capacity retention of the positive electrode active material of Comparative Example 4 is almost similar to that of Comparative Example 3.

Meanwhile, it was found that in the positive electrode active material of Comparative Example 5, like the positive active materials of Examples 1 and 2, both a cobalt coating layer and an aluminum coating layer were formed on the surface, and the diffusion of cobalt into the positive electrode active material particles was suppressed by aluminum to form a coating layer rich in cobalt, and accordingly, the positive electrode active material of Comparative Example 5 had a higher capacity retention and greater high temperature lifetime than Comparative Examples 1 to 4. However, as discussed above, in the positive electrode active material of Comparative Example 5, the rolling density is excessively reduced and the initial resistance value rises.

## Claims

1. A positive electrode active material comprising:
lithium nickel-based transition metal oxide particles in which a mole ratio of nickel in the total transition metals is 80 mol% or greater; and a coating layer formed on a surface of the lithium nickel-based transition metal oxide particles,
wherein the lithium nickel-based transition metal oxide particles are in the form of a single particle consisting of one single nodule or a quasi-single particle, which is a composite of up to 30 nodules,
the coating layer comprises cobalt and aluminum, and
the aluminum is contained in an amount of 0.1 mol% to 0.5 mol% with respect to 100 moles of the lithium nickel-based transition metal oxide.

2. The positive electrode active material of claim 1, wherein the cobalt is contained in an amount of 0.5 mol% to 5.0 mol% with respect to 100 moles of the lithium nickel-based transition metal oxide.

3. The positive electrode active material of claim 1, wherein in the lithium nickel-based transition metal oxide particles, a mole ratio of nickel in the total transition metals is 90 mol% or greater.

4. The positive electrode active material of claim 1, wherein the coating layer is formed to be discontinuously distributed on the surface of the lithium nickel-based transition metal oxide particles.

5. The positive electrode active material of claim 1, wherein the positive electrode active material has a peak in a 2θ range of 37° to 38° on an XRD graph.

6. The positive electrode active material of claim 1, wherein the positive electrode active material has a peak in a 2θ range of 45° to 46° on an XRD graph.

7. The positive electrode active material of claim 1, wherein the nodule of the positive electrode active material has an average particle diameter of 1.0 µm to 9.0 µm.

8. The positive electrode active material of claim 1, wherein the positive electrode active material has a D₅₀ of 4.0 µm to 9.0 µm.

9. A method for preparing a positive electrode active material, the method comprising:
(A) mixing a transition metal precursor containing nickel, cobalt, and manganese with a lithium raw material and subjecting the mixture to primary firing to form a lithium nickel-based transition metal oxide; and
(B) mixing the lithium nickel-based transition metal oxide with cobalt and aluminum and subjecting the mixture to secondary firing to form a positive electrode active material comprising a coating layer;
wherein in the lithium nickel-based transition metal oxide, a mole ratio of nickel in the total transition metals is 80 mol% or greater,
the lithium nickel-based transition metal oxide is a single particle consisting of one single nodule or a quasi-single particle, a composite of up to 30 nodules, and
in the step (B), a mole ratio of aluminum to the lithium nickel-based transition metal oxide (aluminum/lithium nickel-based transition metal oxide) is 0.001 to 0.005.

10. The method of claim 9, wherein the step (B) is performed at 660 °C to 720 °C.

11. The method of claim 9, wherein the coating layer is formed to be discontinuously distributed on a surface of the lithium nickel-based transition metal oxide particles.

12. The method of claim 9, wherein the step (A) is performed at 800 °C to 890 °C.

13. The method of claim 9, wherein a separate washing process is not performed between the step (A) and the step (B).

14. A positive electrode comprising the positive electrode active material of any one of claims 1 to 8.

15. A lithium secondary battery comprising the positive electrode of claim 14.
